(19) Europäisches Patentamt
European Patent Office
Office européen des brevets

(11) **EP 3 956 722 B1**

(12) **EUROPEAN PATENT SPECIFICATION**

(45) Date of publication and mention
of the grant of the patent:
**01.04.2026   Bulletin 2026/14**

(21) Application number: **20834206.3**

(22) Date of filing: **30.06.2020**

(51) International Patent Classification (IPC):
**G02F 1/13357** (2006.01)      **G02F 1/1333** (2006.01)

(52) Cooperative Patent Classification (CPC):
**G02F 1/133606; G02F 1/133603; G02F 1/133607**

(86) International application number:
**PCT/KR2020/008527**

(87) International publication number:
**WO 2021/002655 (07.01.2021 Gazette 2021/01)**

(54) **DISPLAY APPARATUS AND DIFFUSER PLATE THEREOF**

ANZEIGEVORRICHTUNG UND DIFFUSORPLATTE DAFÜR

APPAREIL D'AFFICHAGE ET SA PLAQUE DE DIFFUSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **03.07.2019   KR 20190079795**

(43) Date of publication of application:
**23.02.2022   Bulletin 2022/08**

(73) Proprietor: **Samsung Electronics Co., Ltd.
Suwon-si, Gyeonggi-do 16677 (KR)**

(72) Inventors:
• **LEE, Daehee**
  **Suwon-si Gyeonggi-do 16677 (KR)**
• **PARK, Kyungsoo**
  **Suwon-si Gyeonggi-do 16677 (KR)**
• **CHA, Soonmin**
  **Suwon-si Gyeonggi-do 16677 (KR)**
• **CHOI, Hyeongsik**
  **Suwon-si Gyeonggi-do 16677 (KR)**

(74) Representative: **Walaski, Jan Filip et al
Venner Shipley LLP
200 Aldersgate
London EC1A 4HD (GB)**

(56) References cited:
CN-A- 108 957 606      KR-A- 20100 066 001
KR-B1- 101 398 361      KR-B1- 101 728 678
US-A1- 2007 019 410     US-A1- 2010 164 860
US-A1- 2010 165 247     US-A1- 2011 090 425
US-A1- 2015 103 507     US-A1- 2023 152 499

## Description

[Technical Field]

The disclosure relates to a display apparatus and a diffuser plate thereof, and more specifically, to a display apparatus having an improved structure such that light emitted from a light source is uniformly diffused, and a diffuser plate thereof.

[Background Art]

A display device is a type of output device that visually displays data information, such as text or figures, and images, and includes televisions, various monitors, and various portable terminals, for example, notebook PCs, tablet PCs, and smart phones.

Display devices are classified into emissive type display devices that uses a display panel capable of emitting light itself, such as an organic light emitting diode (OLED) and a non-emissive type display devices that uses a display panel incapable of emitting light itself and needing to be supplied with light from a backlight unit, such as a liquid crystal panel (LCD).

The backlight unit may include a light source, such as a cold cathode fluorescent lamp (CCFL), an external electrode fluorescent lamp (EEFL), and a light emitting diode (LED), and various optical subsidiary materials.

The backlight unit may be classified into either a direct type backlight unit or an edge type backlight unit according to the positions of the light sources. In the direct type backlight unit, the light source is positioned below the display panel, and in the edge type backlight unit, the light source is arranged along an edge of the display panel. The direct type backlight unit may include a diffuser plate disposed in front of the light source to improve the brightness and uniformity of light.

With recent popularity of a slim design display apparatus, there has been an effort to reduce the thickness of the backlight unit for "slimization" of the display apparatus. However, as the distance between the light source and the diffuser plate decrease, the front brightness may not be uniform and an irregularity may occur.

Document US 2011/090425 A1 discloses an optical device with an optical uniform device. Document US 2010/164860 A1 discloses a liquid crystal display device.

[Disclosure]

[Technical Problem]

Provided are a display apparatus and a diffuser plate thereof, capable of simultaneously securing a slim design of a display apparatus and brightness uniformity on the front surface of the display panel.

[Solution to Problem]

According to the invention, there is provided a display apparatus according to claim 1. Preferred features are set out in the dependent claims.

[Advantageous Effects of Invention]

Light is diffused by refraction of light by diffusion patterns of a pattern layer, total reflection of light at a boundary surface between the pattern layer and a reflective layer, and scattering of light by beads inside the reflective layer. Therefore, the light diffusion performance can be improved.

The diffuser plate according to an aspect of the disclosure can exhibit the same light diffusion performance with a smaller number of beads compared to the conventional diffuser plate. Accordingly, light loss due to beads can be reduced and brightness efficiency can be increased.

[Description of Drawings]

FIG. 1 is a view showing the external appearance of a display apparatus according to an embodiment;
FIG. 2 is an exploded view showing main components of the display apparatus according to the embodiment shown in FIG. 1;
FIG. 3 is a side cross-sectional view showing the display apparatus according to the embodiment shown in FIG. 1;
FIG. 4 is an enlarged cross-sectional view showing a diffuser plate according to an embodiment;
FIG. 5 is an enlarged perspective view showing a part of a bottom surface of the diffuser plate according to the embodiment of FIG. 4;
FIG. 6 is an enlarged cross-sectional view showing a diffuser plate according to an embodiment;
FIG. 7 is an enlarged perspective view showing a part of the bottom surface of the diffuser plate of FIG. 6;
FIG. 8 is a cross-sectional view showing a diffuser plate including a glass fiber material according to an embodiment;
FIG. 9 is a cross-sectional view showing a diffuser plate including a bead layer and a pattern layer according to an embodiment; and
FIG. 10 is a sectional view showing a diffuser plate including a glass fiber material in a bead layer and a pattern layer according to an embodiment.

## Mode for the Invention

The embodiments of the present disclosure will now be described with reference to the drawings. In this regard, embodiments may have different forms and should not be construed as being limited to the descriptions set forth herein.

The terminology used herein is for the purpose of describing particular embodiments only and is not intended to limit the disclosure. It is to be understood that the singular forms "a," "an," and "the" include plural references unless the context clearly dictates otherwise. In the drawings, like reference numerals refer to like elements throughout. Further, in the drawings, unrelated parts may be not shown and the sizes of components may be exaggerated for clarity.

It will be further understood that the terms "include", "comprise" and/or "have" when used in this specification, specify the presence of stated features, integers, steps, operations, elements, and/or components, but do not preclude the presence or addition of one or more other features, integers, steps, operations, elements, components, and/or groups thereof.

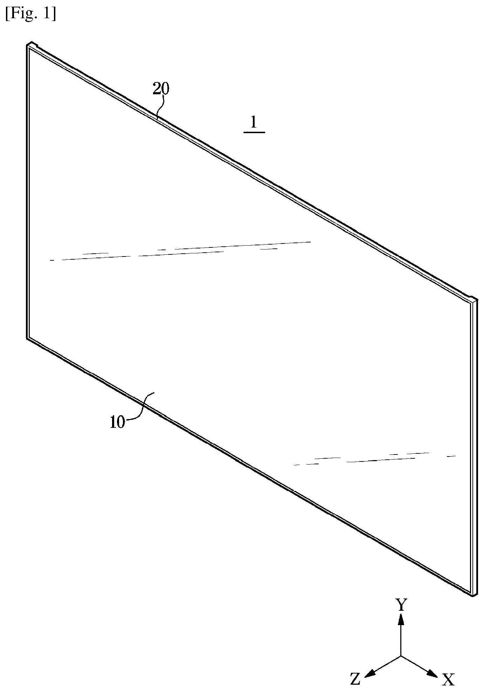

The terms "front", "rear", "upper", "lower", "top", and "bottom" as herein used are defined with respect to the accompanying drawing, such as FIG. 1. In FIG. 1, X-axis, Y-axis, and Z-axis directions perpendicular to each other are illustrated, the X-axis direction refers to the direction along a long side 11 of a liquid crystal panel 10, the Y-axis direction refers to the direction along a short side 12 of the liquid crystal panel 10, and the Z-axis direction refers to the front-rear direction.

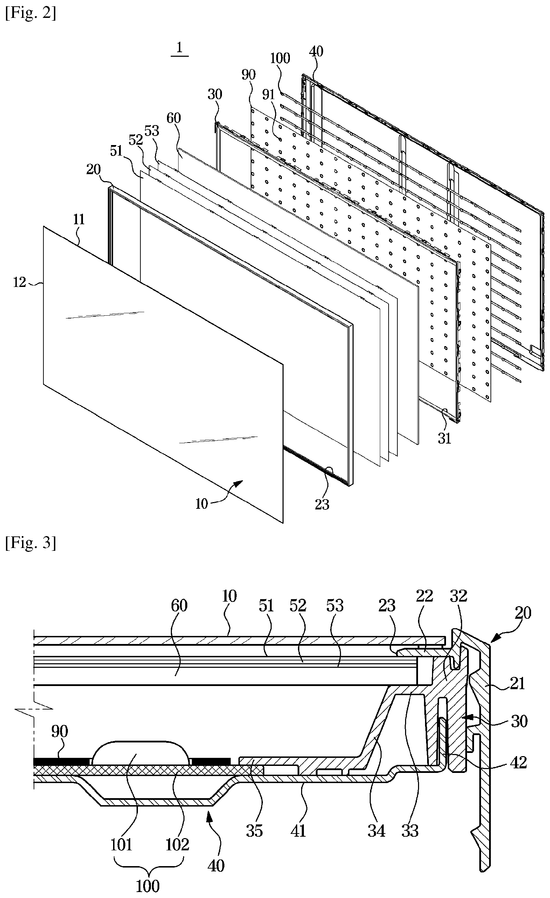

FIG. 1 is a view showing the external appearance of a display apparatus according to an embodiment. FIG. 2 is an exploded view showing main components of the display apparatus according to the embodiment shown in FIG. 1. FIG. 3 is a side cross-sectional view showing the display apparatus according to the embodiment shown in FIG. 3.

Hereinafter, a display apparatus according to an embodiment of the disclosure will be described with reference to FIGS. 1, 2, and 3.

The display apparatus 1 includes a liquid crystal panel 10 configured to display an image, a backlight unit disposed behind the liquid crystal panel 10 to provide light to the liquid crystal panel 10, and a chassis assembly supporting the backlight unit and the liquid crystal panel 10.

The chassis assembly may include a rear chassis 40 provided to support the backlight unit, a front chassis 20 provided in front of the rear chassis 40 to support the liquid crystal panel 10, and a middle mold 30 coupled between the front chassis 20 and the rear chassis 40.

The liquid crystal panel 10 may include a thin film transistor substrate on which thin film transistors are formed in a matrix form, a color filter substrate coupled to the thin film transistor substrate in parallel, and liquid crystals injected between the thin film transistor substrate and the color filter substrate and varying in optical property according to a change in voltage or temperature.

The backlight unit may be disposed behind the liquid crystal panel 10 to transmit light toward the liquid crystal panel 10. The backlight unit may include a light source module 100 including one or more light source(s) 101 and a substrate 102 on which the light source(s) 101 is mounted, and optical members disposed on a moving path of light emitted from the light source(s) 101. A plurality of the light source modules 100 may be spaced apart from each other.

A plurality of the light sources 101 may be mounted on the substrate 102 in a straight line. The substrate 102 may be provided with a driving power line or the like for supplying driving power to the light sources 101 and may be connected to a signal cable and a backlight driving circuit.

A LED may be used as the light source 101. In addition, CCFL, or an EEFL may be used as the light sources 101.

The optical members may be disposed on a path of light emitted from the light source 101 to guide the direction of light travel, reflect light, diffuse light, or improve light characteristics.

The optical members include a reflector sheet 90 capable of reflecting light to prevent light loss, a diffuser plate 60 capable of uniformly diffusing irregular light emitted from the light source 101, a quantum dot sheet 53 capable of changing the wavelength of light to improve color reproducibility, and optical sheets 51 and 52 capable of improving optical characteristics.

The reflector sheet 90 may allow light emitted from the light sources 101 or light directed rearward from the diffuser plate 60 to be reflected toward the diffuser plate 60. The reflector sheet 90 may be disposed on the substrate 102. The reflector sheet 90 may be in close contact with the substrate 102. The reflector sheet 90 may be provided with through holes 91 which the light sources 101 pass through.

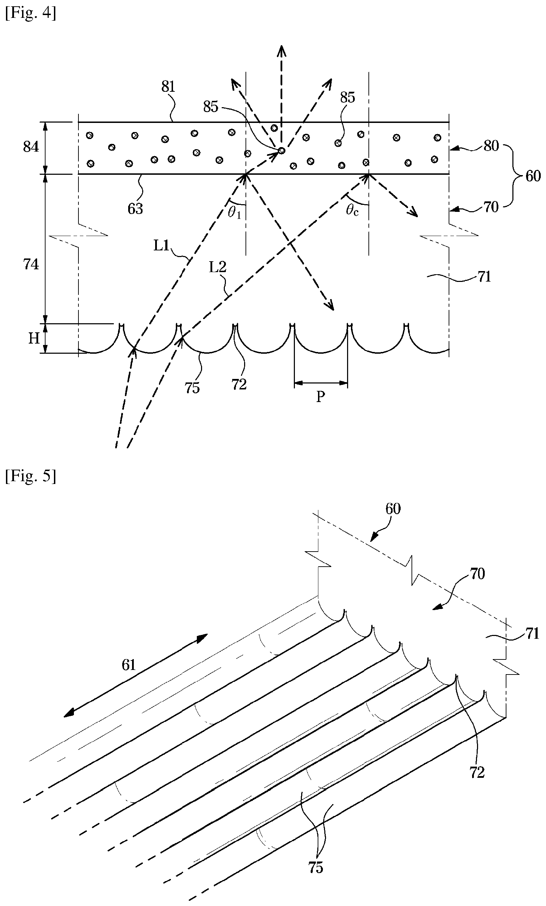

The diffuser plate 60 may evenly diffuses irregular light generated from the light sources 101 and support the quantum dot sheet 53 and the optical sheets 51 and 52. The diffuser plate 60 may allow light incident on an incident surface 72 thereof to be evenly diffused and then to be emitted through an exit surface 81 thereof (see Fig. 4). The detailed structure of the diffuser plate 60 will be described below.

The quantum dot sheet 53 may be disposed in front of the diffuser plate 60 and may be spaced apart from the diffuser plate. Inside the quantum dot sheet 51, quantum dots, a semiconductor crystal having a size of several nanometers and emitting light, may be disposed. Quantum dots may receive blue light and generate all colors of visible light depending on the sizes of the quantum dots. The smaller the quantum dot size, the shorter the wavelength of light, and the larger the quantum dot size, the longer the wavelength of light.

The optical sheets 51 and 52 may be disposed in front of the diffuser plate 60 to improve the optical characteristics of the light emitted from the diffuser plate 60. The optical sheets 51 and 52 may include a diffuser sheet for offsetting the patterns of the diffuser plate 60, a prism sheet for concentrating light to improve the brightness, a protection sheet for protecting other optical sheets from external impact or inflow of foreign substances, and a reflective polarizing sheet (Dual Brightness Enhancement Film: DBEF) for improving brightness by reflecting one polarization and reflecting other polarizations.

The rear chassis 40 may be disposed behind the backlight unit. The rear chassis 40 may be provided in an approximately plate shape in which a rim is bent forward. The backlight unit may be accommodated between the rear chassis 40 and the front chassis 20.

The rear chassis 40 may include a rear base portion 41 on which the light source module 100 is installed, and rear side portions 42 formed at upper, lower, left, and right edges of the rear chassis 40 to be coupled to the middle mold 30.

The rear chassis 40 may dissipate heat generated from a heating element, such as the light source 101, to outside the display apparatus. To this end, the rear chassis 40 may be formed of various metal materials, such as aluminum, stainless steel (SUS), or plastic materials, such as acrylonitrile butadiene styrene (ABS).

The front chassis 20 may be provided in a frame shape having an opening 23 so that light of the backlight unit is provided to the liquid crystal panel 10. The front chassis 20 may include front side portions 21 formed at the upper, lower, left and right edges of the front chassis 20 and configured to be coupled to the middle mold 30, and panel support portions 22 protruding inward from the front side portions 21 to support the liquid crystal panel 10.

The middle mold 30 may support the diffuser plate 60 and reflect light emitted from the light source module 100 to the diffuser plate 60. The middle mold 30 may maintain a gap between the diffuser plate 60 and the light source module 100. The middle mold 30 may be coupled between the front chassis 20 and the rear chassis 40.

The middle mold 30 may be formed in a frame shape having an opening (31 in FIG. 2). The light source module 60 may be disposed in the opening 31. The middle mold 30 includes a frame portion 32 to which the front chassis 20 and the rear chassis 40 are coupled, a diffuser plate support portion 33 protruding inward from the frame portion 32 to support the diffuser plate 60, a reflecting portion 34 extending from the diffuser plate support portion 33 to reflect light, and a substrate supporting portion 35 extending from the reflecting portion 34 to support the substrate 102.

The frame portion 32 may be formed on upper, lower, left, and right edges of the middle mold 30. The frame portion 32 may be coupled to the front chassis 20 and the rear chassis 40 through a variety of known fitting engagement structures and separate fastening members.

The diffuser plate support portion 33 may protrude inward from the frame portion 32 to support the diffuser plate 60. The diffuser plate support portion 33 may support the edge portion of the incident surface of the diffuser plate 60. The diffuser plate support portion 33 may be formed to be parallel to the base portion 41 of the rear chassis 40.

The reflecting portion 34 may reflect light emitted from the light source module 100 to the incident surface of the diffuser plate 44. The reflecting portion 34 may extend from the diffuser plate support portion 33 toward an approximately rear inner side.

The substrate support portion 35 may secure the substrate 102 to prevent the substrate 102 from being lifted off from the base portion 41 of the rear chassis 40. The substrate support portion 35 may be formed at an inner end of the reflecting portion 34. The edge portion of the substrate 102 between the substrate support portion 35 and the base portion 41 may be supported.

The frame portion 32, the diffuser plate support portion 33, the reflecting portion 34, and the substrate support portion 35 of the middle mold 30 may be integrally formed with each other. A material having a high reflectivity may be coated on the surface of the middle mold 30. The material having a high reflectivity may be coated on the entire surface of the middle mold 30 or may be coated only on the surface of the reflecting portion 34. The middle mold 30 as a whole or the reflecting portion 34 of the middle mold 30 may have a white color to efficiently reflect light.

FIG. 4 is an enlarged cross-sectional view showing the diffuser plate according to the embodiment. FIG. 5 is an enlarged perspective view showing a part of a bottom surface of the diffuser plate according to the embodiment shown in FIG. 4.

Referring to FIGS. 4 and 5, a detailed structure of the diffuser plate 60 according to an embodiment will be described.

The diffuser plate 60 has a two-layer structure of a pattern layer 70 and a reflective layer 80. The reflective layer 80 is stacked on a front surface of the pattern layer 70. The pattern layer 70 and the reflective layer 80 may be formed by a double extrusion method.

The pattern layer 70 may have a base portion 71 having an incident surface 72 through which light is incident from the light sources 101. The base portion 71 may have a predetermined thickness 74. Diffusion patterns 75 of micro-sizes are formed on the incident surface 72 to diffuse light incident from the light source 101.

The diffusion patterns 75 may be formed convexly on the incident surface 72 toward the light source module 100. The diffusion patterns 75 may have a lenticular shape. That is, the diffusion patterns 75 may have a hemispherical or elliptical cross section. The diffusion patterns 75 may have a predetermined pitch P and a predetermined height H. The diffusion patterns 75 may be integrally formed with the base portion 71 when the diffuser plate 60 is formed by a double extrusion method.

Light incident on the pattern layer 70 may be diffused by being refracted at a larger inclination due to the diffusion patterns 75.

The diffusion patterns 75 are formed to be elongated in a direction 61 parallel to the long side 11 of the liquid crystal panel 10.

The pattern layer 70 may not include beads 85 for scattering light therein. That is, the pattern layer 70 may be formed to be transparent.

The pattern layer 70 may be formed of polycarbonate (PC), polystyrene (PS), poly methyl methacrylate (PMMA) or methacrylic styrene copolymer (MS).

The reflective layer 80 is stacked on the front surface of the pattern layer 70. Part of the light traveling from the pattern layer 70 to the reflective layer 80 is totally reflected at a boundary surface 63 between the pattern layer 70 and the reflective layer 80. To this end, of the pattern layer 70 may have a first refractive index $n_1$ larger than a second refractive index $n_2$ of the reflective layer 80.

As shown in FIG. 4, light L1 travelling from the pattern layer 70 to the reflective layer 80, having an incident angle $\theta_1$ less than a critical angle $\theta_c$ is partly reflected at the boundary surface 63 and partly refracted. The critical angle is given by the following equation (1):

$$\sin\theta c = \frac{n_2}{n_1} \quad \text{(equation 1)}$$

Light L2 traveling from the pattern layer 70 to the reflective layer 80, having an incident angle $\theta_1$ equal to or greater than the critical angle $\theta_c$ is totally reflected at the boundary surface 63. That is, the light L2 may be totally reflected without being transmitted through the reflective layer 80.

As described above, since some of the light traveling from the pattern layer 70 to the reflective layer 80 is not transmitted through the reflective layer 80 but is guided sideways, the diffusion effect of light may be increased.

The reflective layer 80 may have a predetermined thickness 84, and the thickness 84 of the reflective layer 80 may be formed thinner than the thickness 74 of the base portion 71 of the pattern layer 70. The reflective layer 80 may have an exit surface 81 through which light is emitted.

The reflective layer 80 may be formed of PC, PS, PMMA or MS.

Beads 85 for scattering light may be included inside the reflective layer 80. The bead 85 may have a refractive index different from that of the reflective layer 80. Due to the difference in refractive index, the bead 85 scatter light. By adjusting the amount of the beads 85, the diffusion rate of light may be controlled. The beads 85 may be formed of silicon dioxide (SiO2) or titanium dioxide (TiO2).

As described above, according to an embodiment, light emitted from the light source 101, when entering the pattern layer 70 may be first diffused by the diffusion patterns 75 of the pattern layer 70, and when entering the reflective layer 80 may be secondarily diffused by being totally reflected on the boundary surface 63, and then when travelling in the reflective layer 80 may be thirdly diffused by the beads 85 included in the reflective layer 80.

Therefore, the light diffusion performance and the hiding performance of the light source 101 are improved, and the optical distance between the light source 101 and the diffuser plate 60 may be shortened. Accordingly, the display apparatus 1 may be designed in a slim structure. In addition, since the same diffusion performance may be exhibited with a small amount of the beads 85 included in the reflective layer 80 compared to the conventional technology, light loss caused by the beads 85 may be reduced and the brightness may be increased.

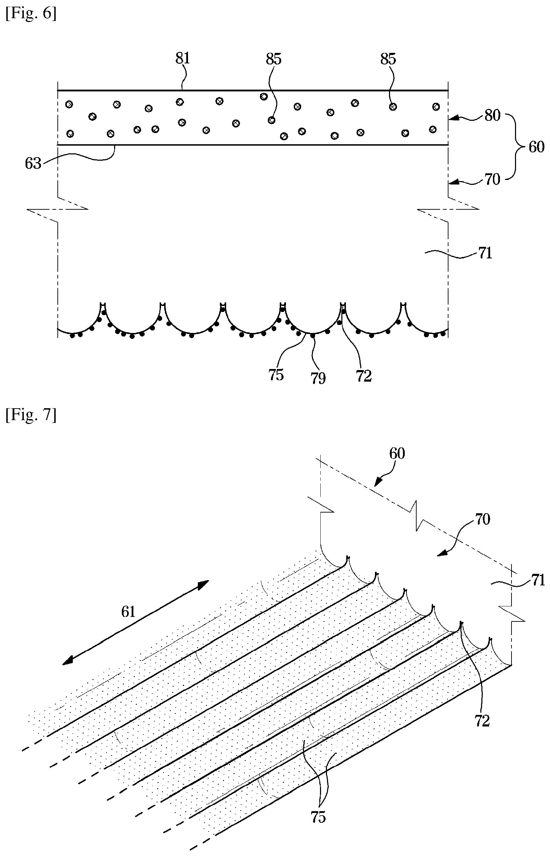

FIG. 6 is an enlarged cross-sectional view showing a diffuser plate according to an embodiment. FIG. 7 is an enlarged perspective view showing a part of the bottom surface of the diffuser plate of FIG. 6.

Referring to FIGS. 6 and 7, the diffusion patterns 75 of the pattern layer 70 of the diffuser plate 60 is subject to sanding treatment.

The sanding treatment is performed by dispersing scattering particles 79 on the surfaces of the diffusion patterns 75. The scattering particles 79 are attached to the surfaces of the diffusion patterns 75 to form a haze on the surfaces of the diffusion patterns 75.

As such, by performing sanding treatment on the surfaces of the diffusion patterns 75, the light diffusion effect may be further increased.

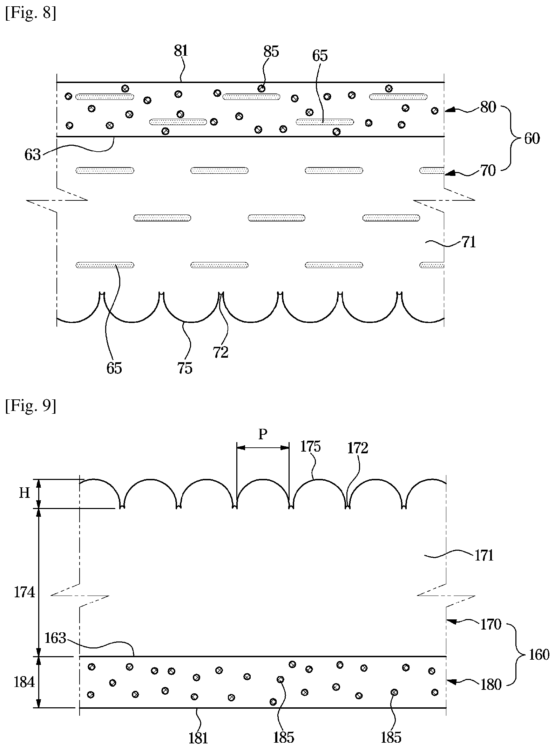

FIG. 8 is a cross-sectional view showing a diffuser plate including a glass fiber material according to an embodiment.

The pattern layer 70 and the reflective layer 80 of the diffuser plate 60 may be formed of PC, PS, PMMA or MS material, and thus have weakness to heat and humidity.

That is, the diffuser plate 60 may expand, contract, or bend due to heat generated by the light source or moisture present in the air. When the diffuser plate 60 is deformed as described above, the light generated from the light source may not be properly diffused, which results in deterioration of the image quality. In addition, there is a need to secure a safe distance from the chassis assembly so as to correspond to the amount of deformation of the diffuser plate 60, which may cause difficulty in achieving slimization and miniaturization of the display apparatus.

According to the embodiment of FIG. 8, in order to prevent or minimize the deformation of the diffuser plate 60, a glass fiber material 65 is included in the pattern layer 70 and the reflective layer 80 of the diffuser plate 60. That is, the pattern layer 70 and the reflective layer 80 of the diffuser plate may be formed by mixing carbonate (PC), polystyrene (PS), poly methyl methacrylate (PMMA) or methacrylate styrene copolymer (MS) with glass fibers.

The glass fiber material 65 may reduce shrinkage and expansion rate of the diffuser plate 60 in response to heat and moisture, and increase mechanical strength. In addition, since the glass fiber material 65 scatters light, the light scattering may be further promoted by the glass fiber material 65.

The glass fiber material 65 has a rod shape elongated in one direction.

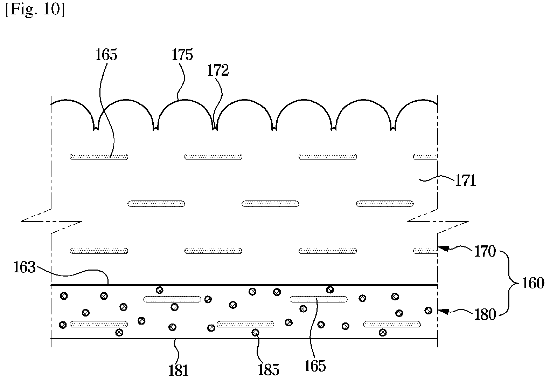

FIG. 9 is a cross-sectional view showing a diffuser plate including a bead layer and a pattern layer according to an embodiment. FIG. 10 is a sectional view showing a diffuser plate including a glass fiber material in a bead layer and a pattern layer according to an embodiment.

Referring to FIGS. 9 and 10, a diffuser plate according to an embodiment will be described. The same reference numerals are assigned to the same configurations as those in the above-described embodiments, and detailed description thereof may be omitted.

A diffuser plate 160 may include a bead layer 180 including beads 185 that scatter light, and a pattern layer 170 may have diffusion patterns 175 convexly formed toward the liquid crystal panel 10. That is, the diffuser plate 160 may have a two-layer structure of the bead layer 180 and the pattern layer 170. The pattern layer 170 may be stacked on a front surface of the bead layer 180. The bead layer 180 and the pattern layer 170 may be formed by a double extrusion method.

The diffuser plate 160 may have an incident surface 181 through which light is incident, and an exit surface 172 through which light is emitted. A boundary surface 163 may be formed between the bead layer 180 and the pattern layer 170.

The bead layer 180 may have a predetermined thickness 184. The thickness 184 of the bead layer 180 may be formed thinner than a thickness 174 of a base portion 171 of the pattern layer 170. The bead layer 180 may have an incident surface 181 through which light is incident.

The bead layer 180 may be formed of PC, PS, PMMA or MS.

The beads 185 for scattering light may be included in the bead layer 180. The beads 185 may have a refractive index different from that of the bead layer 180. The beads 185 may serve to scatter light by the difference in refractive index. By adjusting the amount of the beads 185, the diffusion rate of light may be controlled. The beads 185 may be formed of SiO2 or TiO2.

The pattern layer 170 may include the base portion 171 defining the exit surface 172 through which light is emitted. The base portion 171 may have a predetermined thickness 174. The diffusion patterns 175 of micro-sizes may be formed on the exit surface 172 to diffuse light emitted from the diffuser plate 160.

The diffusion patterns 175 may be formed convexly toward the liquid crystal panel 10 from the exit surface 72. The diffusion patterns 175 may have a lenticular shape. That is, the diffusion patterns 175 may have a hemispherical or elliptical cross section. The diffusion patterns 175 may have a predetermined pitch P and a predetermined height H. The diffusion patterns 175 may be integrally formed with the base portion 171 when the diffuser plate 160 is formed by a double extrusion method.

The diffusion patterns 175 may be formed to be elongated in a direction parallel to the long side 11 of the liquid crystal panel 10. Alternatively, the diffusion patterns 175 may be formed to be elongated in a direction parallel to the short side 12 of the liquid crystal panel 10.

The pattern layer 170 may not include beads for scattering light therein. That is, the pattern layer 170 may be formed to be transparent.

The pattern layer 170 may be formed of PC, PS, PMMA or MS.

As described above, according to an embodiment, the light emitted from the light source 101 may be first diffused by the beads 185 included in the bead layer 180, and when emitted from the pattern layer 170, secondarily diffused by the diffusion patterns 175 of the pattern layer 170.

As shown in FIG. 10, a glass fiber material 165 may be included in the bead layer 180 and the pattern layer 170 of the diffuser plate 160 to prevent or minimize deformation of the diffuser plate 160.

Although embodiments of the disclosure have been shown and described, the above embodiments are for illustrative purposes only, and it will be appreciated by those skilled in the art that changes and modifications may be made in these embodiments without departing from the principles and scope of the protected subjectmatter, the scope of which is defined in the claims.

**Claims**

1. A display apparatus (1) comprising:

   a chassis (40);
   a light source (101) provided on the chassis, the light source being configured to emit light;
   a diffuser plate (60) disposed in front of the light source, the diffuser plate being configured to diffuse the light emitted from the light source; and
   a liquid crystal panel (10) disposed in front of the diffuser plate, the liquid crystal panel being configured to display an image,
   wherein the diffuser plate includes:

   a pattern layer (70) including diffusion patterns (75) protruding toward the light source; and
   a reflective layer (80) provided in contact with the pattern layer such that a portion of light traveling through the pattern layer is totally reflected at a boundary surface between the reflective layer and the pattern layer, **characterised in that** scattering particles (79) are provided on surfaces of the diffusion patterns, each of the pattern layer (70) and the reflective layer (80) includes glass fiber material (65) comprising a plurality of rods, the liquid crystal panel (10) includes a pair of long sides (11) and a pair of short sides (12), and the diffusion patterns (75) extend parallel to the pair of long sides (11) of the liquid crystal panel (10), and **in that** each of the plurality of rods of glass fiber material (65) has a shape that is elongate in one direction parallel to the pair of short sides (12) of the liquid crystal panel (10).

2. The display apparatus of claim 1, wherein the diffusion patterns (75) have a lenticular shape.

3. The display apparatus of claim 1, wherein the diffusion patterns (75) have a hemispherical cross-section or an elliptical cross-section.

4. The display apparatus of claim 1, wherein the pattern layer (70) further includes a base portion (71) having an incident surface (72) through which light emitted from the light source is incident,

   wherein the pattern layer is in contact with the reflective layer, and
   wherein the diffusion patterns (75) are provided on the incident surface of the base portion.

5. The display apparatus of claim 1, wherein the pattern layer (70) has a first refractive index, n1, and wherein the reflective layer has a second refractive index, n2, smaller than the first refractive index.

6. The display apparatus of claim 1, wherein the reflective layer (80) comprises beads (85) for scattering light in the reflective layer.

7. The display apparatus of claim 1, wherein the pattern layer (70) includes polycarbonate, polystyrene, poly methyl methacrylate or methacrylate styrene copolymer.

8. The display apparatus of claim 1, wherein the reflective layer (80) includes polycarbonate, polystyrene, poly methyl methacrylate or methacrylate styrene copolymer.

9. The display apparatus of claim 6, wherein the beads (85) include silicon dioxide or titanium dioxide.

**Patentansprüche**

1. Anzeigevorrichtung (1), umfassend:

   ein Chassis (40);
   eine Lichtquelle (101), die auf dem Chassis bereitgestellt ist, wobei die Lichtquelle dazu konfiguriert ist, Licht zu emittieren;
   eine Diffusorplatte (60), die vor der Lichtquelle angeordnet ist, wobei die Diffusorplatte dazu konfiguriert ist, das aus der Lichtquelle emittierte Licht zu diffundieren; und
   eine Flüssigkristalltafel (10), die vor der Diffusorplatte angeordnet ist, wobei die Flüssigkristalltafel dazu konfiguriert ist, ein Bild anzuzeigen, wobei die Diffusorplatte beinhaltet:

   eine Musterschicht (70) einschließlich Diffusionsmustern (75), die hin zu der Lichtquelle hervorstehen; und
   eine reflektierende Schicht (80), die in Kontakt mit der Musterschicht bereitgestellt ist, sodass ein Abschnitt des durch die Musterschicht verlaufenden Lichts an einer Grenzfläche zwischen der reflektierenden Schicht und der Musterschicht totalreflektiert wird, **dadurch gekennzeichnet, dass** Streupartikel (79) auf Oberflächen der Diffusionsmuster bereitgestellt werden, jede der Musterschicht (70) und der reflektierenden Schicht (80) Glasfasermaterial (65) beinhaltet, das eine Vielzahl von Stäben umfasst, die Flüssigkristalltafel (10) ein Paar von langen Seiten (11) und ein Paar von kurzen Seiten (12) beinhaltet und sich die Diffusionsmuster (75) parallel zu dem Paar von langen Seiten (11) der Flüssigkristalltafel (10) erstrecken, und dadurch, dass jeder der Vielzahl von Stäben aus Glasfasermaterial (65) eine Form aufweist, die länglich in einer Richtung parallel zu dem Paar von kurzen Seiten (12) der Flüssigkristalltafel (10) ist.

2. Anzeigevorrichtung nach Anspruch 1, wobei die Diffusionsmuster (75) eine Linsenform aufweisen.

3. Anzeigevorrichtung nach Anspruch 1, wobei die Diffusionsmuster (75) einen halbkugelförmigen Querschnitt oder einen elliptischen Querschnitt aufweisen.

4. Anzeigevorrichtung nach Anspruch 1, wobei die Musterschicht (70) ferner einen Basisabschnitt (71) mit einer Einfallsfläche (72) beinhaltet, durch die aus der Lichtquelle emittiertes Licht einfällt,

wobei die Musterschicht in Kontakt mit der reflektierenden Schicht ist und
wobei die Diffusionsmuster (75) auf der Einfallsfläche des Basisabschnitts bereitgestellt werden.

5. Anzeigevorrichtung nach Anspruch 1, wobei die Musterschicht (70) einen ersten Brechungsindex n1 aufweist und
wobei die reflektierende Schicht einen zweiten Brechungsindex n2 aufweist, der kleiner als der erste Brechungsindex ist.

6. Anzeigevorrichtung nach Anspruch 1, wobei die reflektierende Schicht (80) Kügelchen (85) zum Streuen von Licht in der reflektierenden Schicht umfasst.

7. Anzeigevorrichtung nach Anspruch 1, wobei die Musterschicht (70) Polycarbonat, Polystyrol, Polymethylmethacrylat oder Methacrylat-Styrol-Copolymer beinhaltet.

8. Anzeigevorrichtung nach Anspruch 1, wobei die reflektierende Schicht (80) Polycarbonat, Polystyrol, Polymethylmethacrylat oder Methacrylat-Styrol-Copolymer beinhaltet.

9. Anzeigevorrichtung nach Anspruch 6, wobei die Kügelchen (85) Siliziumdioxid oder Titandioxid beinhalten.

**Revendications**

1. Appareil d'affichage (1) comprenant :

un châssis (40) ;
une source de lumière (101) prévue sur le châssis, la source de lumière étant configurée pour émettre de la lumière ;
une plaque de diffuseur (60) disposée devant la source de lumière, la plaque de diffuseur étant configurée pour diffuser la lumière émise par la source de lumière ; et
un panneau à cristaux liquides (10) disposé devant la plaque de diffuseur, le panneau à cristaux liquides étant configuré pour afficher une image,
dans lequel la plaque de diffuseur comprend :

une couche de motif (70) comprenant des motifs de diffusion (75) faisant saillie vers la source de lumière ; et
une couche réfléchissante (80) prévue en contact avec la couche de motif de telle sorte qu'une partie de la lumière traversant la couche de motif soit totalement réfléchie au niveau d'une surface limite entre la couche réfléchissante et la couche de motif, **caractérisé en ce que** des particules de diffusion (79) sont fournies sur les surfaces des motifs de diffusion,
chacune de la couche de motif (70) et de la couche réfléchissante (80) comprend un matériau en fibre de verre (65) comprenant une pluralité de tiges,
le panneau à cristaux liquides (10) comprend une paire de côtés longs (11) et une paire de côtés courts (12), et les motifs de diffusion (75) s'étendent parallèlement à la paire de côtés longs (11) du panneau à cristaux liquides (10), et
**en ce que** chacune de la pluralité de tiges de matériau en fibre de verre (65) a une forme qui est allongée dans une direction parallèle à la paire de côtés courts (12) du panneau à cristaux liquides (10).

2. Appareil d'affichage de la revendication 1, dans lequel les motifs de diffusion (75) ont une forme lenticulaire.

3. Appareil d'affichage de la revendication 1, dans lequel les motifs de diffusion (75) ont une section transversale hémisphérique ou une section transversale elliptique.

4. Appareil d'affichage de la revendication 1, dans lequel la couche de motif (70) comprend en outre une partie de base (71) ayant une surface incidente (72) à travers laquelle la lumière émise à partir de la source de lumière est incidente,

dans lequel la couche de motif est en contact avec la couche réfléchissante, et
dans lequel les motifs de diffusion (75) sont fournis sur la surface incidente de la partie de base.

5. Appareil d'affichage de la revendication 1, dans lequel la couche de motif (70) a un premier indice de réfraction, n1, et
dans lequel la couche réfléchissante a un second indice de réfraction, n2, inférieur au premier indice de réfraction.

6. Appareil d'affichage de la revendication 1, dans lequel la couche réfléchissante (80) comprend des perles (85) pour diffuser la lumière dans la couche réfléchissante.

7. Appareil d'affichage de la revendication 1, dans lequel la couche de motif (70) comprend un copolymère de polycarbonate, de polystyrène, de poly méthacrylate de méthyle ou de méthacrylate-styrène.

8. Appareil d'affichage de la revendication 1, dans lequel la couche réfléchissante (80) comprend un copolymère de polycarbonate, de polystyrène, de poly méthacrylate de méthyle ou de méthacrylate-styrène.

9. Appareil d'affichage de la revendication 6, dans lequel les perles (85) comprennent du dioxyde de silicium ou du dioxyde de titane.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011090425 A1

- US 2010164860 A1